# FASCICULE DE BREVET EUROPEEN

(11) **EP 0 751 184 B1**
(45) Date de publication et mention de la délivrance du brevet: **17.03.2004**
(21) Numéro de dépôt: 96401212.4
(22) Date de dépôt: 06.06.1996
(51) Int. Cl.: C08L 67/06

(54) **Compositions thermodurcissables moulables et pigmentables utiles pour obtenir des articles moulés avec retrait nul ou faible expansion**
Formbare und pigmentierbare wärmehärtbare Zusammensetzungen zur Vewendung in der Herstellung von geformten Gegenständen ohne Schrumpf oder mit schwacher Dehnung
Mouldable and pigmentable, heat-hardenable compositions useful to obtain moulded articles having low profile or low expansion

(30) Priorité: 30.06.1995 FR 9507900
(43) Date de publication de la demande: 02.01.1997
(73) Titulaire: Atofina, 92800 Puteaux (FR)
(72) Inventeur: Landru, Lionel, 62300 Eleu Dit Lauwette (FR); Raviola, Florent, 95490 Vaureal (FR)
(74) Mandataire: Chaillot, Geneviève

(56) Documents cités:
- EP-A- 0 454 517
- DE-A- 1 953 062
- PATENT ABSTRACTS OF JAPAN vol. 010, no. 219 (C-363), 31 Juillet 1986 & JP 61 057644 A (SHOWA HIGHPOLYMER CO LTD), 24 Mars 1986,
- DATABASE WPI Week 9237 Derwent Publications Ltd., London, GB; AN 92-304182 XP002031000 & JP 04 209 651 A (INAX CORP) , 31 Juillet 1992
- PATENT ABSTRACTS OF JAPAN vol. 018, no. 236 (C-1196), 6 Mai 1994 & JP 06 025539 A (YAMAHA CORP), 1 Janvier 1994,
- PATENT ABSTRACTS OF JAPAN vol. 012, no. 299 (C-520), 15 Août 1988 & JP 63 069812 A (MATSUSHITA ELECTRIC WORKS LTD), 29 Mars 1988,

## Description

L'invention est relative à des compositions thermodurcissables moulables, notamment à base de résine polyester insaturé, pour obtenir des articles moulés avec un retrait final pratiquement nul (appelé généralement "low profile"- retrait entre 0 et 0,05 % environ) ou une légère expansion, c'est-à-dire un accroissement dimensionnel de + 0,02 % à + 0,09 %, par exemple.

Le document JP-A-61 057644 (Showa Highpolymer Co) décrit une composition à base de résine polyester insaturé utile pour le moulage de produits reproduisant, par exemple, l'aspect du marbre, utilisables comme matériels sanitaires, éviers, tables ...

Le problème à résoudre était de trouver une composition permettant de fabriquer des objets ayant, notamment, une apparence de transparence, et d'éviter le problème lié aux associations polyester insaturé/monomère de réticulation (peu stable en conservation, problème de processibilité ou pas de transparence).

La solution est apportée par une composition particulière comprenant un polyester insaturé particulier, des particules de polymère ou copolymère de méthacrylate de méthyle de masse moléculaire comprise entre 50 000 et 500 000 et de dimension de 1 mm ou moins, une charge minérale contenant au moins 70 % en poids d'hydroxyde d'aluminium et jusqu'à 5 % en poids de monomère à insaturation éthylénique.

Le document JP-A-04 209651 (Inax Corp) concerne une composition à base de résine polyester insaturé et de polymère thermoplastique (polystyrène) pour éviter le retrait (shrink) lors de la polymérisation de la résine de polyester en présence d'un monomère vinylique (styrène) qui sert d'agent de réticulation.

Par suite de la faible compatibilité entre le polystyrène et le polyester insaturé, le polystyrène forme une phase séparée se concentrant en surface, ce qui réduit son efficacité antiretrait (shrink) et, en outre, confère au produit final une mauvaise apparence esthétique.

Pour résoudre ce problème, à la composition de polystyrène et de polyester insaturé, est ajoutée une faible quantité (de 0,005 à 5 % en poids, de préférence 0,01 à 1 % par rapport au polyester insaturé), de polymère de méthacrylate de méthyle en poudre fine (0,25 - 0,35 µm).

Le document JP-A-06 025539 (Yamaha Corp) concerne la préparation de particules de résine colorées dispersables dans une solution de résine polymérisable pour former des articles moulés décoratifs ayant l'apparence de la pierre, du granite, du marbre, etc...

Pour que le brillant des particules colorées soit voisin de celui du produit résultant de la réticulation de la résine polymérisable, et qu'ainsi le produit moulé final présente un bon aspect esthétique, ce brevet propose de préparer ces particules de résine colorées à partir d'une solution de résine thermoplastique (telle que du polyméthacrylate de méthyle) dans une résine thermodurcissable liquide (comme un polyester insaturé), à laquelle on ajoute une charge minérale et d'un pigment coloré, puis en durcissant la composition obtenue et en broyant le produit obtenu.

Le document JP-A-63 069812 (Matsushita) concerne des compositions moulables à base de résine polyester insaturé pour la fabrication d'articles utilisables en fours électroniques par exemple.

Lorsqu'on utilise les articles moulés à partir de ces compositions dans des fours électroniques, qui peuvent atteindre des températures de 240°C, des craquelures se forment dans ces articles et on note un dégagement d'odeurs indésirables.

La composition du moulage, évitant ces ennuis, qui comprend notamment une résine polyester insaturé, du monomère styrène (agent de réticulation), un agent réduisant les retraits après moulage (low shrink) comme du polystyrène ou du polyméthacrylate de méthyle (1 à 20 % en poids), une charge minérale, un agent de renforcement, se caractérise par la présence d'un initiateur de réticulation particulier (peroxyisopropylcarbonate de tert-butyle). Comme indiqué dans ce document, tout autre initiateur de réticulation doit être évité car il génère des odeurs quand l'article est utilisé dans un four électronique.

Le document EP-A-0454517 (Cray Valley S.A.) concerne des compositions moulables à base de résines polyesters insaturés, charges, fibres de verre, agent antiretrait et agent de démoulage.

Elles se caractérisent par un agent de démoulage particulier (sel de calcium de l'acide montanique).

Ces compositions moulables sont destinées à la fabrication de réflecteurs de lampe. Pour obtenir des réflecteurs ayant un état de surface parfait pour conserver des propriétés optiques satisfaisantes, la composition moulable contient cet agent de démoulage spécifique qui ne provoque pas de voile sur la surface réfléchissante comme le faisaient les autres agents de démoulage.

Le document DE-A-19 53062 (Rohm and Haas Co) décrit des systèmes résineux à base de polyesters insaturés pour pièces moulées à faible retrait (low shrink).

Le système comprend, comme composés essentiels, un polyester insaturé, un polymère thermoplastique à fonctionnalité acide (copolymère (méth)acrylique) et un monomère à insaturation éthylénique (par exemple styrène).

Les résines polyester insaturé classiques comprennent habituellement un polyester insaturé dilué dans un monomère à insaturation éthylénique (vinylique ou acrylique) pour ajuster la viscosité en fonction de l'application envisagée. Ce monomère sert de solvant du polyester et d'agent de réticulation. Lors de la réticulation (ou durcissement) du polyester et du monomère, on observe un retrait volumique. Ce retrait entraîne des craquelures, des défauts d'aspect et le gauchissement des pièces. On ajoute donc des agents compensateurs de retrait qui sont généralement des substances thermoplastiques. Introduits sous forme de poudre ou dilués dans le styrène, ces agents sont de nature polystyrène, polyéthylène, polychlorure de vinyle ou polyméthacrylate de méthyle conduisant à des retraits linéaires, après moulage, de 0,2 % à 0,1 % (low shrink) ou bien polyacétate de vinyle, polyester saturé, élastomères conduisant à des retraits proches de zéro (low profile). Que ces additifs compensateurs de retrait soient solubles ou non dans les résines avant réticulation, ils conduisent à une séparation de phase au moment de la réticulation. Les microdomaines formés génèrent un volume de vide compensant le retrait du polyester.

Les compositions thermodurcissables ayant des retraits nuls, préparés à partir des additifs compensateurs de retrait connus jusqu'ici, présentent une impossibilité de pigmentation homogène ; on observe notamment des effets de marbrure blanchâtre. Il n'est donc pas possible d'obtenir des pièces moulées contenant des pigments ou des colorants répartis d'une manière homogène dans la masse. Ceci présente un problème, lorsque l'on souhaite fabriquer des pièces moulées colorées, par exemple, dans le domaine des articles électroménagers.

Les compositions thermodurcissables moulables trouvent aussi une application dans des domaines où l'on souhaite obtenir des pièces moulées à surface parfaitement lisse, pouvant être revêtue par exemple d'une couche de peinture, de vernis ou d'une substance métallique ; c'est le cas, en particulier, des pièces pour automobiles, par exemple des pièces pour la carosserie et des réflecteurs pour dispositifs d'éclairage.

Des pièces de carosserie pour véhicules automobiles sont fabriquées par moulage, par exemple par compression ou injection, de matériaux thermodurcissables du type BMC (Bulk Moulding Compound/Composé de moulage en masse) ou du type SMC (Sheet Moulding Compound/Produit de moulage en feuille) comprenant principalement une résine polyester insaturé, des charges minérales et des fibres de renforcement et au moins un agent compensateur de retrait. Cet agent est particulièrement important pour les BMC ou les SMC destinés à former des pièces de carrosserie, car il est nécessaire d'obtenir, dans certains cas, un retrait nul ou pratiquement nul (low profile), et, dans d'autres cas, une légère expansion pour répondre aux exigences de la classe A du secteur automobile (par exemple obtention d'une surface parfaitement lisse sans retassures).

Les pièces moulées pour automobiles, par exemple celles destinées à la carrosserie, ou des pièces du compartiment moteur doivent pouvoir être peintes. La peinture des pièces en polyester nécessite généralement le dépôt d'une couche d'accrochage (aussi appelé couche d'apprêt) qui favorise l'adhérence des couches de peinture et améliore l'état de surface avant leur application. Pour des peintures appliquées, par exemple, par pistolage électrostatique, on doit déposer au préalable une couche conductrice.

Pour éviter ce prétraitement, on a pensé à introduire des pigments conducteurs dans le mélange thermodurcissable. Cependant, comme indiqué précédemment, avec les compositions contenant des agents de compensation de retrait du type de ceux utilisés jusqu'ici pour obtenir un retrait type "low profile" ou une légère expansion, obtenir une pigmentation homogène est difficile, ce qui conduit, pour la pièce moulée, à un état de surface non approprié pour le dépôt d'une couche lisse et uniforme de peinture par pistolage électrostatique.

Les matériaux thermodurcissables peuvent aussi servir pour la fabrication de réflecteurs (paraboloïdes) pour dispositifs d'éclairage, par exemple de véhicules automobiles. Le réflecteur doit présenter une surface réfléchissante de très bonne qualité. Pour cela, la surface interne concave du réflecteur est recouverte d'une mince couche d'aluminium. Avant le dépôt de cette couche (aluminage), les pièces moulées subissent un traitement préliminaire, par exemple, le dépôt d'un vernis, destiné à conférer à la pièce un état de surface parfait et à favoriser l'adhérence de la couche d'aluminium. Un autre traitement possible est de rendre la surface antistatique et d'effectuer un dépôt de poudre à température élevée, pour obtenir un film facilitant l'adhérence de la couche d'aluminium.

Ces traitements sont coûteux et il serait naturellement souhaitable, pour des raisons évidentes d'économie, de pouvoir supprimer les traitements préliminaires des pièces moulées à partir de matériaux thermodurcissables BMC ou SMC, que ce soit le traitement avant le dépôt de peinture ou bien celui avant l'aluminage et donc d'obtenir des pièces moulées dont l'état de surface permet le dépôt direct de l'aluminium ou de la peinture.

L'invention a pour objet des compositions thermodurcissables pigmentables permettant de fabriquer des pièces moulées colorées ou non, présentant une surface lisse, exempte de défauts, avec un brillant de surface particulièrement élevé et, en outre, avec un retrait type "low profile" (retrait de 0 à 0,05 % environ) ou une légère expansion.

Les compositions thermodurcissables, moulables et pigmentables, selon l'invention sont définies dans les revendications.

Les compositions spécifiques selon l'invention, à base de résine thermordurcissable et de polymère (méth)acrylique sous forme de poudre permettent de fabriquer des objets présentant une teinte homogène dans la masse (absence de marbrures) due à une bonne répartition des pigments ou colorants et un degré de qualité de surface suffisant, dans la plupart des cas, pour permettre l'application directe d'un enduit protecteur et/ou décoratif ou à fonction spécifique (par exemple réflexion de la lumière).

De telles pièces moulées, à caractéristiques remarquables (surface lisse, brillant, pigmentation homogène), peuvent être utilisées directement par exemple, comme articles électroménagers, meubles ; on peut aussi les utiliser dans des domaines, comme l'automobile, où un dépôt de substance (peinture, vernis etc...) est nécessaire ; dans ce cas, ces dépôts peuvent être réalisés sans les prétraitements usuels.

Comme résine thermodurcissable, on peut utiliser une résine polyester insaturé qui est, comme il est bien connu, un polyester résultant de la polycondensation d'au moins un diacide insaturé ou son anhydride et d'au moins un diol. On peut citer notamment l'acide maléique et son anhydride et l'acide fumarique. De faibles quantités de diacides ou anhydrides aromatiques, cycloaliphatiques ou aliphatiques saturés peuvent être employées pour modifier les propriétés mécaniques et chimiques du produit final. Ainsi, on peut utiliser l'acide orthophtalique et son anhydride, l'acide isophtalique, l'acide adipique, l'anhydride tétrahydrophtalique. Pour des résines à résistance au feu améliorée, on peut utiliser des monomères halogénés comme l'anhydride tétrabromo- ou tétrachlorophtalique et l'acide hexachloroendométhylène tétrahydrophtalique. Les principaux diols généralement utilisés sont l'éthylène glycol, le propylène glycol, le diéthylène glycol, le dipropylène-glycol, le néopentyl glycol ou le 1,3-butanediol.

Comme indiqué précédemment, le polyester est dilué dans un monomère à insaturation éthylénique, pour obtenir la résine avec la viscosité nécessaire à l'application envisagée. Le monomère sert aussi à former le réseau tridimensionnel lors de la réticulation. Différents monomères peuvent être utilisés, principalement des monomères acryliques ou vinyliques, comme le styrène, l'α-méthylstyrène, le vinyltoluène. Le monomère le plus couramment utilisé est le styrène.

Comme résine thermodurcissable, on peut aussi utiliser une résine époxyvinylester qui est une résine époxy modifiée par un acide, en particulier, un acide (méth)acrylique.

Les catalyseurs sont utilisés pour provoquer la réticulation du polyester. Ce sont généralement des peroxydes organiques qui peuvent être, suivant la température de la polymérisation, le peroxyde de ditertio-butyle, le peroctoate de tertio-butyle, le perbenzoate de tertio-butyle et le peroxyde de benzoyle.

Les poudres de polymère (méth)acrylique sont avantageusement formées d'homopolymère de méthacrylate de méthyle ou de copolymère de méthacrylate de méthyle et de monomères d'acrylate d'alkyle (jusqu'à 20 % en poids) dans lequel le groupe alkyle a de 1 à 4 atomes de carbone ou de monomères vinyliques, comme le styrène ; le copolymère peut être éventuellement réticulé par des quantités usuelles d'un monomère bifonctionnel, par exemple inférieures à 1 % en poids par rapport à l'ensemble des monomères.

La masse moléculaire en poids du polymère (méth)acrylique peut varier dans des limites très larges, par exemple de 100.000 jusqu'à la réticulation. La poudre de polymère (méth)acrylique a une dimension de particules comprise entre 10 et 50 µm. Lorsque les particules ont une dimension trop élevée (supérieure à 150 µm), les pièces moulées obtenues présentent des défauts de surface (rugosité ou aspect piqueté).

On pense que la poudre de polymère (méth)acrylique joue le rôle d'agent compensateur de retrait et qu'elle aide aussi à l'homogénéisation et à la stabilisation de l'ensemble des éléments par suite de l'augmentation de la viscosité liée probablement à l'absorption du monomère à insaturation éthylénique, comme le styrène, par la poudre de polymère, ceci en l'absence d'agent de mûrissement.

Il est, cependant, possible d'ajouter un agent de mûrissement usuel, comme un oxyde ou un hydroxyde alcalinoterreux, par exemple l'oxyde de magnésium, la magnésie.

Les poudres finement divisées de polymères (méth)acryliques peuvent être obtenues par différents procédés, par exemple, par des procédés de polymérisation en émulsion ou en suspension, ce dernier étant particulièrement préféré, ou bien par des procédés de dispersion appropriés dans lesquels on dissout, par exemple, un polymère solide et on le distribue dans un non-solvant ou bien par broyage de plaques, de blocs ou de granulés ou de perles.

La composition selon l'invention contient des charges minérales, par exemple, du carbonate de calcium, de l'alumine hydratée etc...Comme il est bien connu, ces charges apportent des propriétés telles que propriétés rhéologiques, résistance au feu, propriétés chimiques.

La composition peut contenir, en outre, jusqu'à 60 % en poids de fibres de renforcement choisies notamment parmi les fibres de verre de longueur comprise entre 3 et 25 mm, les fibres de carbone ou d'aramide, telles que celles vendues sous la dénomination commerciale KEVLAR par la Société Dupont de Nemours.

La composition peut aussi contenir d'autres additifs compensateurs de retrait, comme le polystyrène, le polymère d'acétate de vinyle, les copolymères d'éthylène et d'acétate de vinyle et les élastomères pour permettre l'ajustement de propriétés comme la résistance à la rupture à la flexion. Ces additifs représentent, en général, 0 à 25 % en poids de la composition.

Elle contient des agents facilitant le démoulage choisis parmi la cire ou des stéarates métalliques (par exemple des stéarates de zinc ou de calcium), de préférence dans une quantité allant jusqu'à 4 % en poids.

Elle peut aussi contenir jusqu'à 0,1 % en poids d'inhibiteurs, comme l'hydroquinone, la benzoquinone et la parabenzoquinone, pour éviter la réticulation du polyester en cours de synthèse ou lors de la dilution avec le monomère éthylénique.

La composition contient de 0,1 à 5 % de pigments organiques ou minéraux, comme du noir animal, de l'oxyde de fer etc...

Une composition préférée selon l'invention comprend :
- de 15 à 35 % de résine thermodurcissable
- de 0,3 à 0,9 % de catalyseur
- de 35 à 56 % de charges minérales
- de 0,1 à 5 % de pigments
- de 7 à 25 % de fibres de renforcement
- de 4 à 1 2 % de poudre de polymère (méth)acrylique
- de 0 à 1 2 % d'agent antiretrait
- de 0,5 à 4 % d'agent facilitant le démoulage

Cette composition est particulièrement utilisable pour former des pièces de carrosserie par moulage. On peut aussi l'utiliser pour fabriquer des pièces du compartiment moteur, en particulier des couvre-culasses.

Une composition selon l'invention, utilisable notamment pour former des réflecteurs pour dispositifs d'éclairage, peut comprendre, jusqu'à 10 % en poids et, de préférence de 5 à 10 % de microsphères de verre. Ces dernières servent à améliorer la réflexion optique.

Les compositions selon l'invention peuvent aussi contenir des fibres végétales et/ou synthétiques, par exemple jusqu'à 45 % en poids de la composition et, en particulier, de 5 à 35 %. Dans ce cas, la composition peut contenir moins de charges minérales, par exemple de 3 à 20 % en poids. Ces fibres de cellulose, comme décrit dans la demande FR-A-2704863, permettent de diminuer la densité des compositions de sorte que les pièces, moulées à partir de ces compositions, sont très allégées par rapport aux pièces équivalentes moulées à partir de compositions BMC classiques. Ces fibres peuvent être de diverses origines, éventuellement d'éléments broyés de récupérations, par exemple des fibres cellulosiques comme fibres de bois, coton, sisal, etc, fibres synthétiques (polypropylène, polytéréphtalate d'éthylène...) et de différentes longueurs (quelques microns à plusieurs millimètres). Les pièces obtenues à partir de ces compositions peuvent être recyclées, comme décrit au document précédent.

Une autre composition préférée selon l'invention comprend, ainsi, en poids :
- de 15 à 35 % de résine thermodurcissable
- de 0,3 à 0,9 % de catalyseur
- de 3 à 20 % de charges minérales
- de 0,1 à 5 % de pigments
- de 7 à 25 % de fibres de renforcement
- de 4 à 12 % de poudre de polymère (méth)acrylique
- de 0 à 18 % d'agent antiretrait
- de 0,5 à 4 % d'agent facilitant le démoulage
- de 5 à 35 % de fibres de cellulose
Les pièces moulées obtenues à partir des compositions selon l'invention présentent un retrait type "low profile" (retrait de 0 à 0,05 % environ) ou une légère expansion de l'ordre de + 0,05 % à + 0,09 % , ce qui les rend utilisables notamment pour les pièces de carrosserie pour véhicules automobiles.

Les pièces moulées obtenues à partir de ces compositions présentent une surface très lisse, exempte de défauts, en particulier de retassures à l'endroit des bossages et des nervures de renfort.

Les compositions selon l'invention contiennent des pigments ou des colorants répartis d'une manière homogène, ce qui conduit à des pièces moulées parfaitement pigmentées dans la masse. On peut donc utiliser ces pièces pour tout article devant présenter une teinte homogène dans la masse, par exemple, des articles électroménagers.

Du fait de la répartition homogène des pigments dans les compositions selon l'invention, on peut obtenir, si ces pigments sont conducteurs, des pièces ayant une résistivité superficielle comprise entre 10³ et 10⁷ Ω/log 10 (mesurée suivant la norme NFC 26215). Avec un tel état de surface, les pièces peuvent être recouvertes d'une peinture par pistolage électrostatique sans nécessiter le dépôt d'une couche d'apprêt conductrice. Pour former des paraboloïdes (réflecteurs) pour phares de véhicules automobiles par exemple, le dépôt de la couche d'aluminium (aluminage) peut être fait directement sur la pièce moulée sans que soit nécessaire le traitement préalable usuel.

Les compositions pour former des pièces moulées ayant une résistivité superficielle comprise entre 10³ et 10⁷Ω/log 10 comprennent de 1 % à 4 % de substances conductrices, notamment du noir de carbone.

Les compositions selon l'invention peuvent être obtenue par différents procédés.

Le procédé préféré consiste à utiliser deux malaxeurs.

Un premier malaxeur à ruban permet de réaliser un mélange homogène des éléments solides, par exemple des différentes charges minérales, des fibres de verre, de la poudre dé polymère (méth)acrylique et des autres additifs compensateurs de retrait éventuels et des fibres de cellulose.

Un deuxième malaxeur à bras en Z sert dans un premier temps au mélange des éléments liquides (résines, catalyseurs, colorants...). Il sert ensuite à l'opération finale consistant à imprégner le mélange des éléments solides à l'aide du mélange liquide.

A titre d'exemple, le premier malaxeur à ruban a une capacité de 1200 litres et est chargé de 300 kg de matières solides. Ces matières y sont malaxées pendant une minute à une minute et demi à 42 tours/min.

Le deuxième malaxeur, à bras en Z, possède également une capacité de 1200 litres et fonctionne également à 42 tours/min. Le malaxage des composants liquides dure environ 10 min et l'imprégnation des composants solides de 4 à 6 min selon le pourcentage de fibres de verre.

Les exemples suivants, non limitatifs, illustrent l'invention.

### Exemples 1 à 5 : Compositions pour pièces de carrosserie

On prépare des compositions BMC par le procédé décrit précédemment. Les quantités des différents constituants de la composition sont indiquées au tableau 1. Ces quantités sont données en poids.

La résine est une résine polyester modifié orthophtalique (Résine 8532 vendue par la Société REICHOLD).

La poudre de polymère (méth)acrylique est formée par des perles de copolymère réticulé de méthacrylate de méthyle et d'acrylate d'éthyle d'une dimension de particules de 10 à 50 µm, dont la préparation est décrite plus loin.

Le catalyseur est un mélange 50/50 en poids de peroctoate de tertiobutyle et de perbenzoate de tertiobutyle.

Le noir de carbone conducteur est le produit PF 300, vendu par la société VULCAN.

L'additif compensateur de retrait est formé d'un mélange (50/50 en poids environ) d'un copolymère d'éthylène et d'acétate de vinyle vendu sous la dénomination commerciale XF 504 et d'un élastomère vendu sous la dénomination XF 300 par la Société MACSTRA.

Comme charges minérales, on utilise un mélange 50/50 en poids d'alumine hydratée et de carbonate de calcium. L'agent de démoulage est du stéarate de calcium.

Les compositions sont moulées à chaud par compression à une température de l'ordre de 145°C, à une pression de 80 bars environ, pendant une durée de 10 s/mm.

Les pièces moulées obtenues présentent une expansion comprise entre + 0,05 % et + 0,09 %.

L'état de surface des pièces est parfait et l'aspect brillant. La coloration est uniforme (répartition homogène du noir de carbone).

On mesure les caractéristiques mécaniques et diélectriques sur ces pièces moulées. Les résultats sont indiqués au tableau 2.

### Préparation des perles des copolymère réticulé

Dans un réacteur en verre de 2 litres à double enveloppe, muni d'un agitateur à ancre, d'un réfrigérant à reflux, d'un thermomètre et d'un tube plongeant pour le barbotage de gaz, on introduit 825 g d'une solution aqueuse à 2 % en poids d'alcool polyvinylique (degré d'hydrolyse, % molaire, environ 88\Mw = 150 000), puis on chasse l'air par barbotage d'azote pendant 30 minutes, à température ambiante et en maintenant l'agitateur à 50 tours par minute. On porte ensuite l'agitation à 500 tours par minute et on introduit un mélange, préalablement désoxygéné, de 268,7 g de méthacrylate de méthyle, 13,5 g d'acrylate d'éthyle et 2,75 g de diméthacrylate d'éthylèneglycol. Cette solution contient sous forme dissoute 1,35 g de peroxyde de lauroyle. On laisse sous agitation pendant 60 minutes à température ambiante, puis on porte la température interne à 75°C en l'espace de 75 minutes. On règle la température de la double enveloppe à 80°C et on attend l'apparition d'un pic de la température interne jusqu'à environ 85°C dans le temps de 40 à 60 minutes. On maintient la double enveloppe à 80°C pendant 30 minutes, puis on refroidit et sépare les perles par filtration, lavage et finalement séchage. Le produit final présente une granulométrie, exprimée comme valeur moyenne du diamètre, d'environ 25-30 µm.

### Exemple 6 : Témoin

On prépare une composition BMC à partir des constituants des exemples 1 à 5, avec la différence que cette composition ne contient pas de perles de polymère (méth)acrylique.

La surface apparaît marbrée résultant d'une mauvaise dispersion du pigment.

L'état de surface est non satisfaisant (phénomène de zones moins lisses et moins brillantes).

Les quantités des constituants sont indiquées au tableau 1. Le résultat des caractéristiques au tableau 2.

### Exemple 7 : Témoin

On prépare une composition comprenant les mêmes composants que ceux des exemples 1 à 5, à l'exception des perles de polymère (méth)acrylique et du noir de carbone.

Les quantités des constituants sont indiquées au tableau 1 et les caractéristiques au tableau 2.

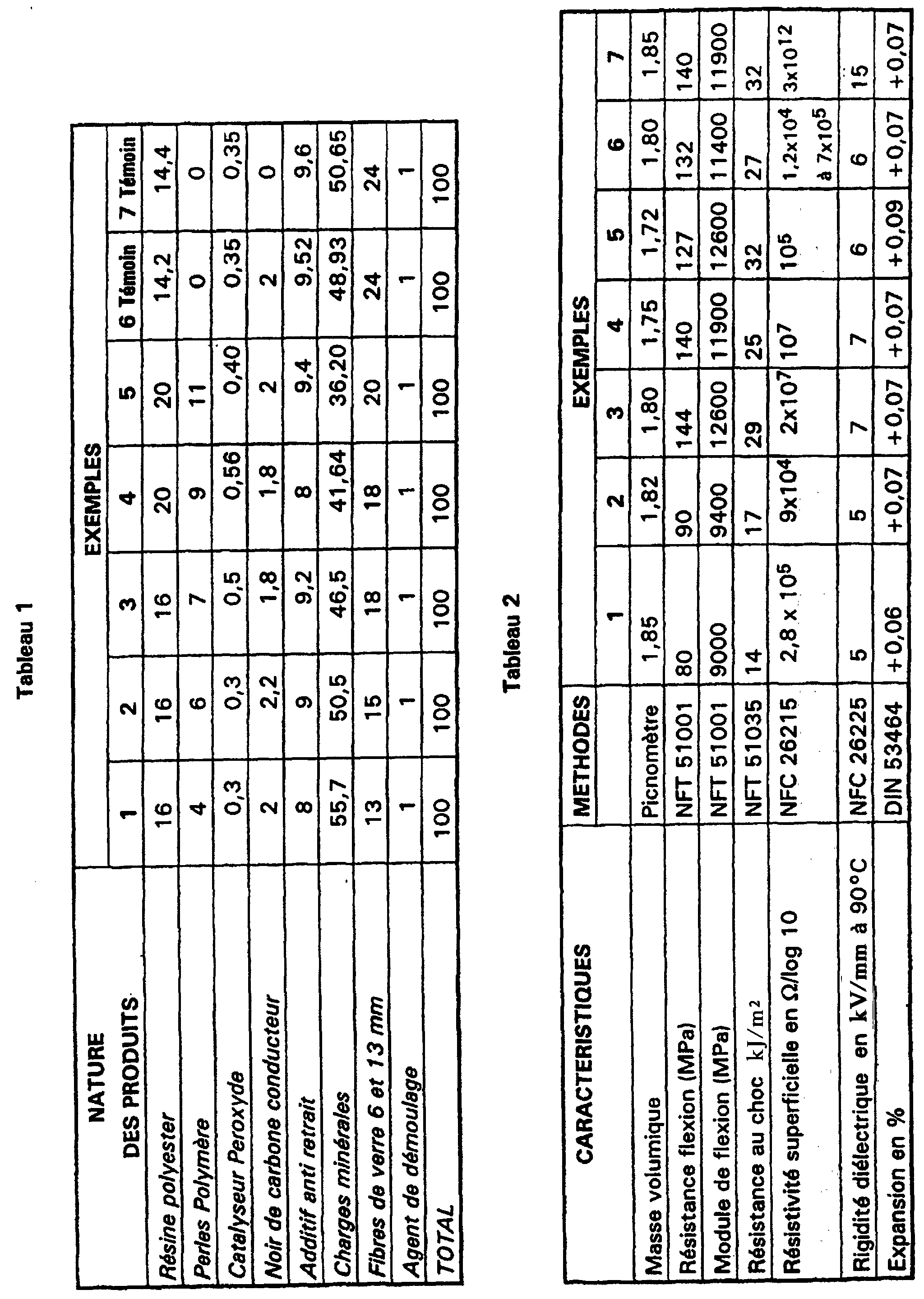

On peut constater, d'après les résultats donnés au tableau 2, que les compositions selon l'invention permettent la fabrication de pièces moulées présentant notamment une résistivité superficielle homogène sur toute la surface, alors qu'avec une composition témoin (exemple 6), la mauvaise dispersion du pigment conducteur se traduit par des valeurs de résistivité superficielle qui varient de 1,2 x 10⁴ à 7 x 10⁵ Ω/log 10, ce qui interdit tout dépôt direct homogène de peinture.

A noter que, avec une composition sans noir de carbone, la résistivité superficielle est de 3 x 10¹² Ω/log 10. La très bonne isolation entraîne une impossibilité de dépôt direct de peinture.

Avec les pièces selon l'invention, on peut déposer directement une couche de peinture par pistolage électrostatique sans nécessiter le dépôt d'une couche d'apprêt.

### Exemples 8 à 10 : Compositions pour reflecteurs de phares automobiles

On prépare deux compositions BMC selon l'invention (exemples 8 et 9) et une composition témoin (exemple 10) qui comprennent les constituants indiqués dans le tableau 3, dont les quantités sont données en poids.

Ces compositions sont utilisées pour fabriquer des réflecteurs par moulage par compression dans les conditions indiquées aux exemples 1 à 5.

Les caractéristiques physiques mesurées comme aux exemples 1 à 5 sont données au tableau 4.

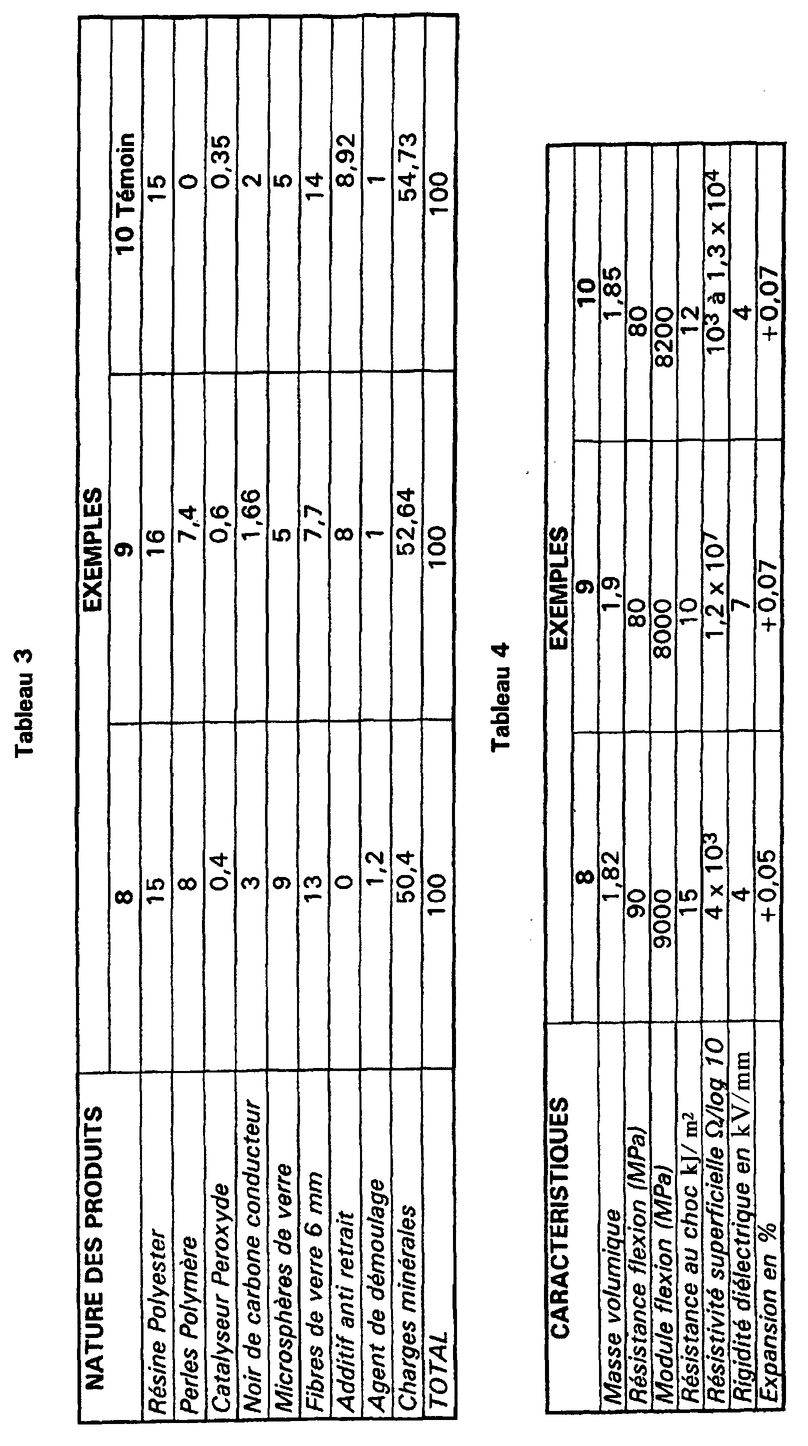

Avec les compositions selon l'invention, on peut obtenir des articles moulés sur lesquels on peut déposer directement (sans le prétraitement usuel) une couche d'aluminium (aluminage), particulièrement en utilisant des moules dont la surface est parfaitement polie (rugosité inférieure ou égale à 0,05 µm).

La résistivité mesurée avec le produit témoin n'est pas uniforme sur toute la surface, ce qui entraîne un dépôt non uniforme et non homogène d'aluminium.

### Exemple 11

On opère comme à l'exemple 3, mais on utilise, comme perles de polymères (méth)acryliques, du polyméthacrylate de méthyle non réticulé, dont la masse moléculaire moyenne en poids est de 1.900.000 et la dimension des particules de 24 à 43 µm, obtenu par polymérisation en suspension.

Des pièces moulées obtenues à partir de cette composition présentent une résistivité superficielle de 4,5 x 106 Ω/log 10 et une rigidité diélectrique de 5 kV/mm.

### Exemples 12 et 13

On prépare deux compositions : l'une selon l'invention (exemple 12), contient des perles de polymère méthacrylique réticulé des exemples 1 à 5 ; l'autre (exemple 13, témoin) n'en contient pas.

Les deux compositions comprennent une résine de polyester insaturé (celle des exemples 1 à 5), un additif antiretrait (acétate de polyvinyle, vendu sous la dénomination XM 300 par la société REICHOLD), du peroctoate de tertiobutyle comme catalyseur, du carbonate de calcium comme charge minérale, du noir de carbone (produit PF 300 de la société VULCAN), du stéarate de calcium comme agent facilitant le démoulage, des fibres de verre (13 mm) et des fibres de cellulose (coton).

Les quantités des composants sont indiquées au tableau 5.

A partir de ces compositions, on a préparé des pièces par injection. Les pièces répondent aux exigences de la classe A du secteur automobile. L'état de surface est parfait.

Les pièces obtenues à partir de la composition selon l'invention (exemple 12) présentent une coloration uniforme, indiquant une très bonne dispersion du noir de carbone, ce qui n'est pas le cas avec les compositions de l'exemple 13 témoin.

Les pièces des deux exemples 12 et 13 sont recyclables selon le procédé du document FR-A-2704863. Les caractéristiques mécaniques et diélectriques sont indiquées au tableau 6.

A noter que les pièces obtenues avec la composition témoin (exemple 13) présentent une résistivité superficielle qui n'est pas uniforme sur toute la surface, par suite de la mauvaise dispersion du noir de carbone.

**Tableau 5**

| **Nature des produits** | **Exemple 12** | **Exemple 13** **(témoin)** |
|---|---|---|
| Résine polyester | 27,37 % | 27,37 % |
| Perles polymère | 6,30 % | 0,00 % |
| Catalyseur peroxyde | 0,90 % | 0,90 % |
| Additif antiretrait | 17,67 % | 23,97 % |
| Agent facilitant le démoulage | 3,0 % | 3,0 % |
| Cellulose (coton) | 6,2 % | 6,2 % |
| Charge minérale | 18,56 % | 18,56 % |
| Noir conducteur | 2,0 % | 2,0 % |
| Fibres de verre | 18,0 % | 18,0 % |

**Tableau 6**

| **Caractéristiques** | **Exemple 12** | **Exemple 13** **(témoin)** |
|---|---|---|
| Masse volumique | 1,35 | 1,33 |
| Résistance flexion (MPa) | 137 | 140 |
| Module de flexion (MPa) | 13 200 | 13 000 |
| Résistance au choc kJ/m² | 24 | 25 |
| Résistivité superficielle Ω/log¹⁰ | 2x10⁴ | 7x10⁴ à 8x10⁵ |
| Rigidité diélectrique kV/mm | 5 | 7 |
| Expansion en % | + 0,05 | + 0,05 |

### Exemples 14 et 15 - compositions pour couvre-culasses

On prépare deux compositions BMC, dont les composants sont indiqués au tableau 7. Les quantités sont données en poids.

En particulier, la résine thermodurcissable est une résine époxyvinyester (Résine 810 de DSM).

Le catalyseur est du peroctoate de tertio-butyle.

Les additifs compensateurs de retrait sont constitués par un élastomère vendu sous la dénomination XF 300 par la Société MACSTRA et par du polystyrène JA 100 d'Elf Atochem S.A.

L'inhibiteur est de l'hydroquinone en solution à 50 % dans le styrène.

A partir de ces compositions, on forme, par moulage, des couvre-culasses.

L'état de surface des pièces est parfait et l'aspect brillant. La coloration est uniforme (répartition homogène du noir de carbone).

Les caractéristiques mécaniques et diélectriques sont données au tableau 8.

Les pièces moulées obtenues peuvent supporter des températures de 140° C environ en continu et des pics de température pouvant atteindre 200 °C.

Elles présentent d'excellentes propriétés mécaniques, notamment la résistance au choc.

**Tableau 7**

| **Nature des produits** | | **Exemples** | |
|---|---|---|---|
| | | **14** | **15** |
| Résine | époxyvinylester | 26,6 | 31,2 |
| Perles polymère | de l'exemple 11 | 5,6 | 7,4 |
| Catalyseur | POBT | 1 | 1 |
| Charges minérales | Carbonate de calcium | 31,17 | 7,47 |
| Noir de carbone | PF 300 (Vulcan) | 2 | 2 |
| Additifs antiretrait | élastomère | 4,4 | 5,7 |
| | polystyrène | 1,2 | 2,2 |
| Agent de démoulage | Stéarate de Calcium | 3 | 3 |
| Inhibiteur de polymérisation | Hydroquinone | 0,03 | 0,03 |
| Fibres de verre 13 mm | | 25 | 40 |

**Tableau 8**

| **Caractéristiques** | **Exemples** | |
|---|---|---|
| | **14** | **15** |
| Masse volumique | 1,72 | 1,65 |
| Résistance flexion (MPa) | 140 | 247 |
| Module de flexion (MPa) | 12000 | 14700 |
| Résistance au choc (kJ/m²) | 35 | 65 |
| Résistivité superficielle (Ω/log 10) | 104 | 104 |
| Rigidité diélectrique (kV/mm) | 8 | 8 |
| Retrait (%) | 0,05 | 0,05 |

On peut noter, particulièrement, que la faible résistivité permet le dépôt direct de peinture par pistolage électrostatique.

## Revendications

1. Compositions thermodurcissables moulables et pigmentables pour l'obtention d'articles moulés présentant un retrait nul ou pratiquement nul ou une faible expansion, comprenant en poids :
- de 15% à 45% de résine thermodurcissable ;
- de 0,2% à 1% de catalyseur ;
- de 3% à 15% de poudre de polymère (méth)acrylique d'une dimension comprise entre 10 et 50 µm ;
- de 3% à 60% de charges minérales ; et
- de 0,1% à 5% de pigments organiques ou minéraux ;
- jusqu'à 60% de fibres de renforcement ; et
lesdites compositions contenant également un agent facilitant le démoulage choisi parmi les stéarates métalliques et la cire.

2. Composition conforme à la revendication 1, dans laquelle la résine thermodurcissable est choisie parmi les résines polyesters insaturées dérivant de l'acide maléique, son anhydride ou l'acide fumarique et d'au moins un diol.

3. Composition conforme à la revendication 2, **caractérisée en ce que** le polyester est préparé, en outre, en présence de diacides ou anhydrides aromatiques, cycloaliphatiques ou aliphatiques saturés.

4. Composition conforme à l'une quelconque des revendications 1 à 3, dans laquelle le polymère (méth)acrylique est un homopolymère de méthacrylate de méthyle ou un copolymère de méthacrylate de méthyle et de comonomères acrylate d'alkyle, dans lequel le groupe alkyle a de 1 à 4 atomes de carbone ou de comonomères vinyliques.

5. Composition conforme à la revendication 4, dans laquelle le polymère (méth)acrylique est du polyméthacrylate de méthyle ayant une masse moléculaire moyenne en poids supérieure à 100 000.

6. Composition conforme à l'une quelconque des revendications 1 à 5, comprenant un catalyseur choisi parmi les peroxydes organiques.

7. Composition conforme à l'une quelconque des revendications 1 à 6, comprenant une charge choisie parmi le carbonate de calcium et l'alumine hydratée.

8. Composition conforme à l'une quelconque des revendications 1 à 7 comprenant, en outre, des fibres de renforcement choisies parmi les fibres de verre, de carbone ou d'aramide.

9. Composition conforme à l'une quelconque des revendications 1 à 8, dans laquelle le pigment est un pigment conducteur, par exemple du noir de carbone.

10. Composition conforme à l'une quelconque des revendications 1 à 9 comprenant, en outre, un agent antiretrait choisi parmi le polystyrène, le polyacétate de vinyle, les élastomères et les copolymères d'éthylène et d'acétate de vinyle.

11. Composition conforme à l'une quelconque des revendications 1 à 10, **caractérisée par le fait que** l'agent facilitant le démoulage est présent dans une quantité allant jusqu'à 4% en poids.

12. Composition conforme à l'une quelconque des revendications 1 à 11, **caractérisée par le fait que** les stéarates métalliques sont choisis parmi les stéarates de calcium et de zinc.

13. Composition conforme à l'une quelconque des revendications 1 à 12 comprenant, en poids :
• de 15 à 35% de résine thermodurcissable ;
• de 0,3 à 0,9% d'un catalyseur ;
• de 35 à 56% de charges minérales ;
• de 0,1 à 5% de pigments ;
• de 7 à 25% de fibres de renforcement ;
• de 4 à 12% de poudres de polymère (méth)acrylique ;
• de 0 à 12% d'agent antiretrait ;
• de 0,5 à 4% d'agent facilitant le démoulage.

14. Composition conforme à l'une quelconque des revendications 1 à 13 comprenant de 0 à 10% en poids de microsphères de verre.

15. Composition conforme à l'une quelconque des revendications 1 à 14 comprenant, en outre, des fibres végétales et/ou synthétiques.

16. Composition conforme à la revendication 15, comprenant, en poids :
• de 15 à 35% de résine thermodurcissable ;
• de 0,3 à 0,9% de catalyseur ;
• de 3 à 20% de charges minérales ;
• de 0,1 à 5% de pigments ;
• de 7 à 25% de fibres de renforcement ;
• de 4 à 12% de poudres de polymère (méth)acrylique ;
• de 0 à 18% d'agent antiretrait ;
• de 0,5 à 4% d'agent facilitant le démoulage ;
• de 5 à 35% de fibres de cellulose.

17. Articles moulés avec retrait nul ou pratiquement nul ou légère expansion, obtenus à partir de la composition conforme à l'une quelconque des revendications 1 et 16, et comprenant de 1 à 4% en poids de pigments conducteurs, présentant une résistivité superficielle comprise entre 10³ et 10⁷ Ω/log 10.

## Patentansprüche

1. Formbare und pigmentierbare duroplastische Zusammensetzungen zur Herstellung von Gusswaren, die eine Schrumpfung von gleich Null oder praktisch gleich Null oder eine geringe Ausdehnung aufweisen, bezogen auf das Gewicht umfassend:
- 15% bis 45% eines duroplastischen Harzes;
- 0,2% bis 1% eines Katalysators;
- 3% bis 15% eines (Meth)acrylpolymerpulvers mit einer Abmessung zwischen 10 und 50 µm;
- 3% bis 60% mineralische Füllstoffe; und
- 0,1% bis 5% organische oder mineralische Pigmente;
- bis zu 60% Verstärkungsfasern; und
wobei diese Zusammensetzungen auch ein Mittel, das die Formtrennung erleichtert und das unter den metallischen Stearaten und Wachs ausgewählt wird, umfassen.

2. Zusammensetzung nach Anspruch 1, bei der das duroplastische Harz unter den ungesättigten Polyesterharzen ausgewählt wird, die von der Maleinsäure, ihrem Anhydrid oder der Fumarsäure und mindestens einem Diol abgeleitet sind.

3. Zusammensetzung nach Anspruch 2, **dadurch gekennzeichnet, dass** das Polyester ferner im Beisein von zweibasischen Säuren oder aromatischen, cycloaliphatischen oder aliphatischen gesättigten Anhydriden hergestellt wird.

4. Zusammensetzung nach einem der Ansprüche 1 bis 3, bei der das (Meth)acrylpolymer ein Homopolymer von Methylmethacrylat oder ein Copolymer von Methylmethacrylat und von Alkylacrylatcomonomeren ist, bei dem die Alkylgruppe 1 bis 4 Kohlenstoffatome oder Vinylcomonomere aufweist.

5. Zusammensetzung nach Anspruch 4, bei der das (Meth)acrylpolymer Methylpolymethacrylat ist, das eine durchschnittliche Molekularmasse bezogen auf das Gewicht von mehr als 100 000 aufweist.

6. Zusammensetzung nach einem der Ansprüche 1 bis 5, umfassend einen Katalysator, der unter den organischen Peroxiden ausgewählt wird.

7. Zusammensetzung nach einem der Ansprüche 1 bis 6, umfassend einen Füllstoff, der unter dem Calciumcarbonat und wasserhaltigen Aluminiumoxid ausgewählt wird.

8. Zusammensetzung nach einem der Ansprüche 1 bis 7, ferner umfassend Verstärkungsfasern, die unter den Glas-, Kohlenstoff- oder Aramidfasern ausgewählt werden.

9. Zusammensetzung nach einem der Ansprüche 1 bis 8, bei der das Pigment ein leitendes Pigment, beispielsweise Rußschwarz, ist.

10. Zusammensetzung nach einem der Ansprüche 1 bis 9, ferner umfassend ein Antischrumpfmittel, das unter Polystyrol, Vinylpolyacetat, den Elastomeren und Copolymeren von Ethylen und Vinylacetat ausgewählt wird.

11. Zusammensetzung nach einem der Ansprüche 1 bis 10, **dadurch gekennzeichnet, dass** das die Formtrennung erleichternde Mittel in einer Menge von bis zu 4 Gew.-% vorhanden ist.

12. Zusammensetzung nach einem der Ansprüche 1 bis 11, **dadurch gekennzeichnet, dass** die metallischen Stearate unter den Calcium- und Zinkstearaten ausgewählt werden.

13. Zusammensetzung nach einem der Ansprüche 1 bis 12, bezogen auf das Gewicht umfassend:
• 15 bis 35% eines duroplastischen Harzes;
• 0,3 bis 0,9% eines Katalysators;
• 35 bis 56% mineralische Füllstoffe;
• 0,1 bis 5% Pigmente;
• 7 bis 25% Verstärkungsfasern;
• 4 bis 12% (Meth)acrylpolymerpulver;
• 0 bis 12% eines Antischrumpfmittels;
• 0,5 bis 4% eines Trennmittels.

14. Zusammensetzung nach einem der Ansprüche 1 bis 13, umfassend 0 bis 10 Gew.-% Glasmikrosphären.

15. Zusammensetzung nach einem der Ansprüche 1 bis 14, ferner umfassend pflanzliche und/oder synthetische Fasern.

16. Zusammensetzung nach Anspruch 15, bezogen auf das Gewicht umfassend:
• 15 bis 35% eines duroplastischen Harzes;
• 0,3 bis 0,9% eines Katalysators;
• 3 bis 20% mineralische Füllstoffe;
• 0,1 bis 5% Pigmente;
• 7 bis 25% Verstärkungsfasern;
• 4 bis 12% (Meth)acrylpolymerpulver;
• 0 bis 18% eines Antischrumpfmittels;
• 0,5 bis 4% eines Trennmittels;
• 5 bis 35% Zellulosefasern.

17. Gusswaren mit einer Schrumpfung von gleich Null oder praktisch gleich Null oder einer leichten Ausdehnung, die aus der Zusammensetzung nach einem der Ansprüche 1 bis 16 hergestellt werden und 1 bis 4 Gew.-% leitende Pigmente umfassen, die einen Oberflächenwiderstand zwischen 10³ und 10⁷ Ω/log 10 aufweisen.

## Claims

1. Mouldable and pigmentable thermosetting compositions for the preparation of moulded articles exhibiting a zero or virtually zero shrink or a low expansion, comprising, by weight:
- from 15% to 45% of thermosetting resin;
- from 0.2% to 1% of catalyst;
- from 3% to 15% of (meth)acrylic polymer powder with a size of between 10 and 50 µm;
- from 3% to 60% of inorganic fillers; and
- from 0.1% to 5% of organic or inorganic pigments;
- up to 60% of reinforcing fibres; and
the said compositions also comprising an agent which facilitates removal from the mould chosen from metal stearates and wax.

2. Composition in accordance with Claim 1, in which the thermosetting resin is chosen from unsaturated polyester resins deriving from maleic acid, its anhydride or fumaric acid and from at least one diol.

3. Composition in accordance with to Claim 2, **characterized in that** the polyester is prepared in addition in the presence of saturated aliphatic, cycloaliphatic or aromatic diacids or anhydrides.

4. Composition in accordance with any one of Claims 1 to 3, in which the (meth)acrylic polymer is a methyl methacrylate homopolymer or a copolymer of methyl methacrylate and of alkyl acrylate comonomers in which the alkyl group has from 1 to 4 carbon atoms or of vinyl comonomers.

5. Composition in accordance with Claim 4, in which the (meth)acrylic polymer is poly(methyl methacrylate) having a weight-average molecular mass of greater than 100 000.

6. Composition in accordance with any one of Claims 1 to 5, comprising a catalyst chosen from organic peroxides.

7. Composition in accordance with any one of Claims 1 to 6, comprising a filler chosen from calcium carbonate and hydrated alumina.

8. Composition in accordance with any one of Claims 1 to 7, additionally comprising reinforcing fibres chosen from glass fibres, carbon fibres or aramid fibres.

9. Composition in accordance with any one of Claims 1 to 8, in which the pigment is a conductive pigment, for example carbon black.

10. Composition in accordance with any one of Claims 1 to 9, additionally comprising an antishrink agent chosen from polystyrene, poly(vinyl acetate), elastomers and copolymers of ethylene and of vinyl acetate.

11. Composition in accordance with any one of Claims 1 to 10, **characterized in that** the agent which facilitates removal from the mould is present in an amount ranging up to 4% by weight.

12. Composition in accordance with any one of Claims 1 to 11, **characterized in that** the metal stearates are chosen from calcium stearate and zinc stearate.

13. Composition in accordance with any one of Claims 1 to 12, comprising, by weight:
• from 15 to 35% of thermosetting resin;
• from 0.3 to 0.9% of a catalyst;
• from 35 to 56% of inorganic fillers;
• from 0.1 to 5% of pigments;
• from 7 to 25% of reinforcing fibres;
• from 4 to 12% of (meth)acrylic polymer powders;
• from 0 to 12% of antishrink agent;
• from 0.5 to 4% of agent which facilitates removal from the mould.

14. Composition in accordance with any one of Claims 1 to 13, comprising from 0 to 10% by weight of glass microspheres.

15. Composition in accordance with any one of Claims 1 to 14, additionally comprising plant and/or synthetic fibres.

16. Composition in accordance with Claim 15, comprising, by weight:
• from 15 to 35% of thermosetting resin;
• from 0.3 to 0.9% of catalyst;
• from 3 to 20% of inorganic fillers;
• from 0.1 to 5% of pigments;
• from 7 to 25% of reinforcing fibres;
• from 4 to 12% of (meth)acrylic polymer powders;
• from 0 to 18% of antishrink agent;
• from 0.5 to 4% of agent which facilitates removal from the mould;
• from 5 to 35% of cellulose fibres.

17. Moulded articles with zero or virtually zero shrink or slight expansion, obtained from the composition in accordance with any one of Claims 1 and 16 and comprising from 1 to 4% by weight of conductive pigments, exhibiting a surface resistivity of between 10³ and 10⁷ Ω/log 10.
